# EUROPEAN PATENT SPECIFICATION

(11) **EP 4 182 115 B1**
(45) Date of publication and mention of the grant of the patent: **17.12.2025**
(21) Application number: 21728299.5
(22) Date of filing: 14.05.2021
(51) Int. Cl.: B23Q 5/56, B23Q 16/10

(54) **MOVABLE TABLE ASSEMBLY FOR A MACHINE TOOL OF LARGE DIMENSIONS**
BEWEGLICHE TISCHANORDNUNG FÜR EINE WERKZEUGMASCHINE MIT GROSSEN ABMESSUNGEN
ENSEMBLE TABLE MOBILE POUR MACHINE-OUTIL DE GRANDES DIMENSIONS

(30) Priority: 16.07.2020 IT 202000017305
(43) Date of publication of application: 24.05.2023
(73) Proprietor: INNSE-BERARDI S.P.A. SOCIETA' UNIPERSONALE, 20134 Milano (IT)
(72) Inventor: CODINI, Roberto, 20134 Milano (IT); ZANATTA, Giovanni, 20134 Milano (IT)
(74) Representative: Pulieri, Gianluca Antonio
(86) International application number: PCT/IB2021/054138
(87) International publication number: WO 2022/013622

(56) References cited:
- CN-U- 202 411 844
- CN-U- 204 771 788
- CN-U- 206 605 237
- DE-A1- 102011 082 501
- US-A1- 2009 238 655
- US-A1- 2012 210 551
- US-A1- 2014 312 548

## Description

The present invention belongs to the field of machine tools; in particular, the present invention relates to a movable table assembly for a machine tool of large dimensions, such as a milling machine or a gantry boring machine.

Such machines are usually intended for mechanical processing operations on very bulky and heavy semi-finished products, such as reactor casings for the chemical or nuclear industry, ship masts, and the like. For this reason, even if the dimensions of the machines themselves are considerable (for example, the Applicant manufactures and markets the gantry milling machine referred to as ATLAS, provided with a bench up to 30 meters long), it is highly important to limit the dimensions of some accessory assemblies, so that they do not interfere with the movement operations of the semi-finished products to be processed or with the processing operations themselves. Examples of table assemblies are disclosed in US2014/312548A1, US2009/238655A1, US2012/210551A1, CN 206 605 237 U, which forms the basis for the preamble of claim 1, and CN 202 411 844 U.

It is the object of the present invention to provide a movable table assembly for a machine tool of large dimensions, such as a milling machine, a lathe, or a gantry boring machine, for which the overall dimensions of the motor assembly, intended for rotationally driving the table, are highly small, while maintaining the performance unchanged.

Such an object is achieved by a table assembly according to claim 1. The dependent claims identify further advantageous embodiments of the table assembly.

The features and advantages of the table assembly according to the present invention will become apparent from the following description, given by way of nonlimiting example, in accordance with the accompanying drawings, in which:

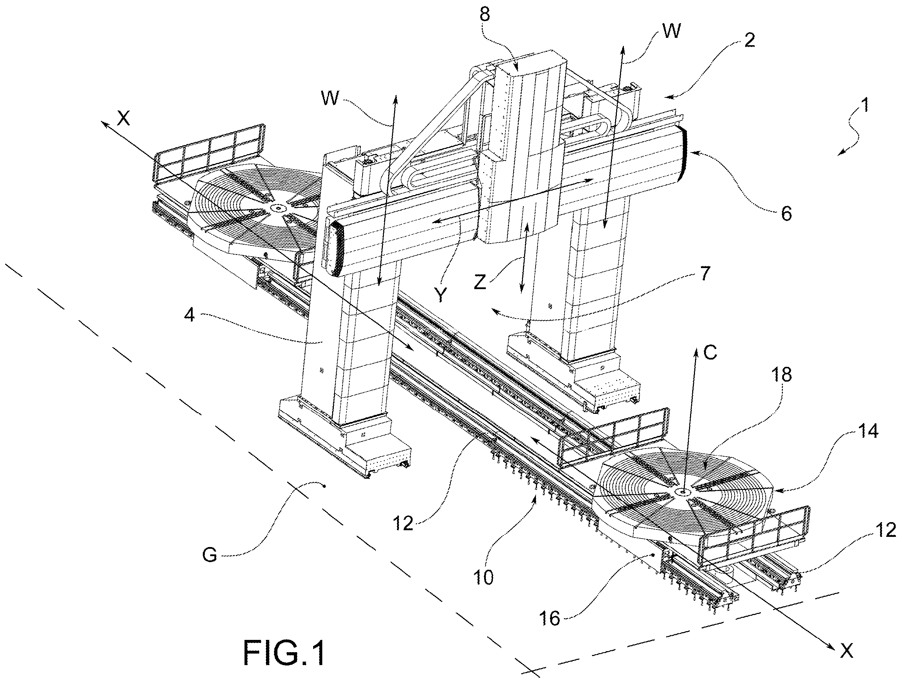

- figure 1 shows a machine tool according to an embodiment of the present invention;

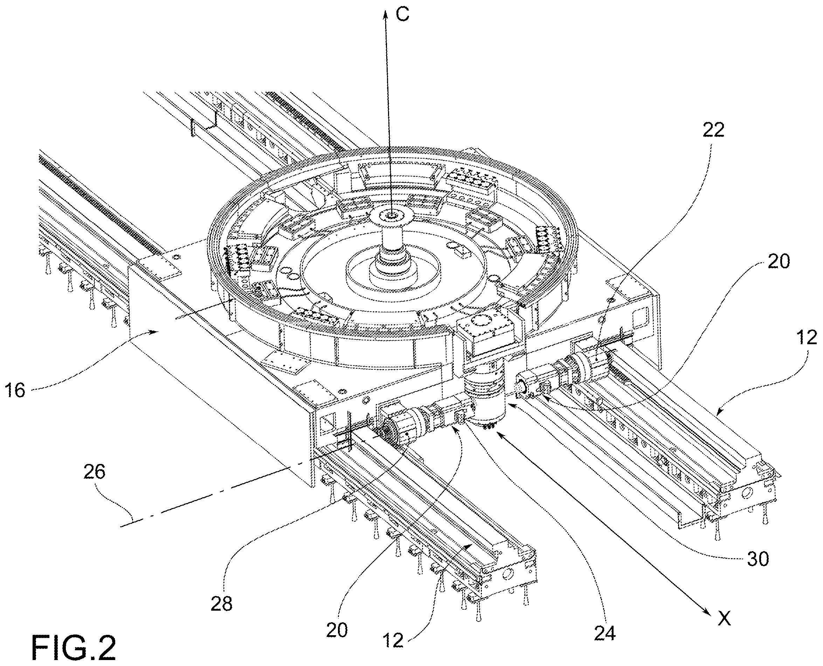

- figure 2 depicts a table assembly (without table) according to an embodiment of the present invention, supported by benches;

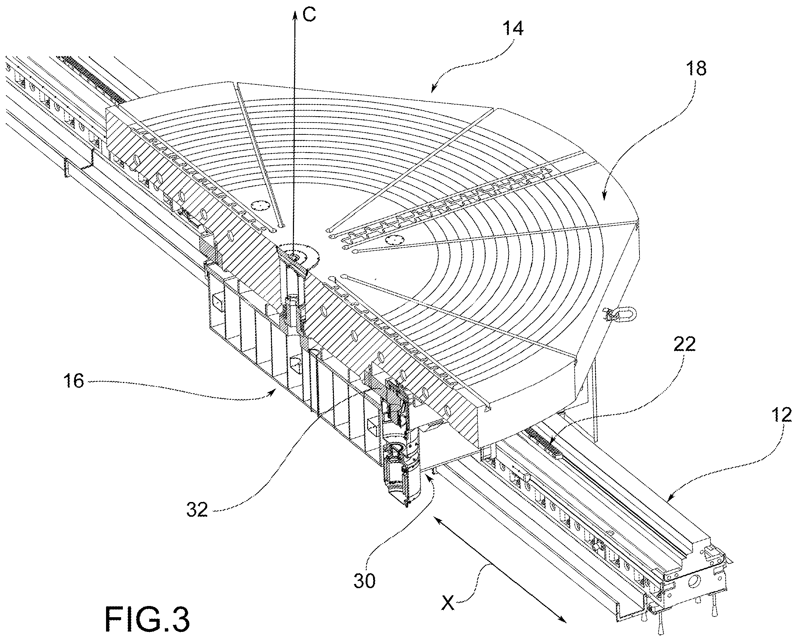

- figure 3 depicts a sectional view of a table assembly according to an embodiment of the present invention, supported by benches;

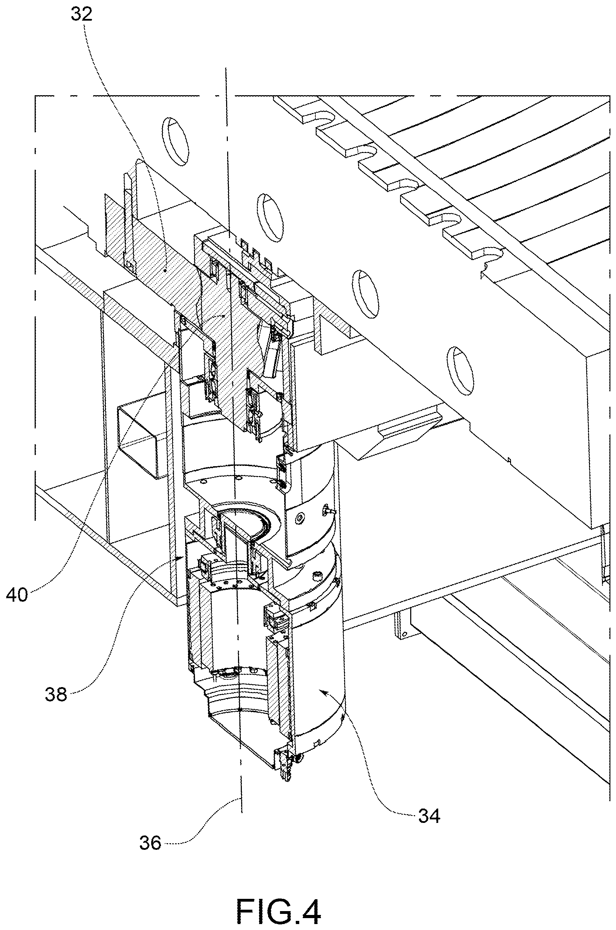

- figure 4 is an enlargement of a detail of figure 3 which highlights a rotation assembly of the table assembly.

For clarity of presentation, reference will be made hereinafter to a gantry milling machine; however, the invention is feasible on any other machine tool of large dimensions, for example a boring machine or a lathe.

In the figures of the accompanying drawings, 1 indicates a machine tool of large dimensions as a whole, for example a gantry milling machine, resting on a ground plane G. The machine tool 1 comprises, for example, a gantry structure 2 comprising a pair of vertical uprights 4 and a crosspiece 6 supported by said uprights 4; the pair of uprights 4 and the crosspiece 6 delimit an opening 7 of the gantry structure 2.

The crosspiece 6 is translatable on command along said uprights 4, along a vertical axis W. The machine tool 1 further comprises a cart 8, supported by the crosspiece 4, which is translatable on command along the crosspiece 4, along a transverse axis Y. The machine tool 1 finally comprises a ram (not shown), supported by the cart 8, which is translatable along a further vertical axis Z, carrying a rotating spindle, to which a tool can be applied in order to perform chip removal processing operations.

The machine tool 1 further comprises a support apparatus 10, constrained to the ground plane G, having an extension along a longitudinal direction X, for example such as to cross the opening 7 of the gantry structure 2.

In the example shown, the uprights 4 are fixed, i.e., they are constrained to the ground plane G; according to a further embodiment, the uprights are movable on command parallel to the longitudinal direction X.

The support apparatus 10 comprises a pair of benches 12, each of which extends mainly along the longitudinal axis X and is transversely spaced apart from the other, and at least one table assembly 14 for supporting the semi-finished product to be processed.

An embodiment of such a support apparatus is shown in Italian patent no. 1413392 to the Applicant, the teaching of which on the construction of such an apparatus is explicitly incorporated herein.

According to an embodiment, the machine tool 1 comprises two table assemblies 14, one arranged on one side and the other on the other side of the gantry structure 2.

The table assembly 14 comprises a slide 16 supported by the benches 12 and which is translatable on command along said benches 12, along a longitudinal axis X, and a table 18 supported by the slide 16 and which is rotatable with respect to a vertical axis C.

The table assembly 14 further comprises slide translation means adapted to be driven to translate the slide 16 along said benches 12.

According to a preferred embodiment, the slide translation means comprise at least one gearmotor assembly 20 on board the slide 16, engaged with a rack 22 fixed to the respective bench 12.

For example, the gearmotor assembly 20 is arranged between the two benches 12 and comprises a motor 24, having a motor axis 26 orthogonal to the longitudinal axis X and to the vertical axis C, and a reduction gear 28 having an inlet, engaged with the motor 24, and an outlet, engaged with the rack 22, coaxial to the motor axis 26.

Preferably, the slide translation means comprise at least two gearmotor assemblies 20, for example arranged on the same side of the slide 16. Said gearmotor assemblies 20 are arranged so that the respective motors 24 are transversely spaced.

Preferably, the slide translation means comprise two pairs of gearmotor assemblies 20, each pair being arranged on one side of the slide 16, so that the motors are driven in opposition, to eliminate the clearances between the outlet pinion of the respective gearmotor and the rack (Twin-Drive).

The table assembly 14 further comprises table rotation means adapted to be driven to rotate the table 16 about the vertical axis C.

The table rotation means comprise at least one rotation assembly 30 on board the slide 16, engaged with a ring gear 32 of the table 18.

The rotation assembly 30 comprises a torque motor 34 having a vertical motor axis 36, i.e., parallel to the vertical axis C, and a reduction gear 38, preferably epicyclic, having an inlet, engaged with the torque motor 34, and an outlet pinion 40, engaged with the ring gear 32 of the table 18, coaxial to the motor axis 36.

In particular, the epicyclic reduction gear comprises a sun gear, planetary gears, a planetary carrier, and a ring gear for reduction gear; the sun gear is rotatable and engaged with the motor axis 36 of the torque motor 34, the ring gear for reduction gear is fixed, the planetary gears roll on the sun gear and on the ring gear for reduction gear, and the planetary carrier is engaged with the outlet pinion 40.

Preferably, the outlet pinion 40 meshes directly with the ring gear 32 of the table 18; according to an alternative embodiment, at least one idle gear is placed between the outlet pinion 40 and the ring gear 32.

Preferably, the rotation assembly 30 is arranged between the two benches 12; for example, the rotation assembly 30 is arranged between two gearmotor assemblies 20 of the slide translation means.

Preferably, the table rotation means comprise at least two rotation assemblies 30, each rotation assembly 30 being arranged on a side of the slide 16. In this variant, when the table 18 must provide a continuous rotation, generally at high speed, for performing turning or boring operations, the two torque motors are driven in concert; on the other hand, when the table 18 must provide a positioning rotation, for example in milling operations, the two torque motors are driven in opposition, to eliminate the clearances between the outlet pinion of the respective reduction gear and the ring gear of the table (Twin-Drive).

Innovatively, the table assembly according to the present invention meets the needs of the field, since it allows to minimize the overall dimensions of the motors required for the rotation of the table.

In particular, according to an advantageous aspect, the combination of the torque motor and the reduction gear allows to exploit the compact dimensions of the torque motor and the high speeds which can be reached with the reduction gear.

It is apparent that, in order to meet contingent needs, those skilled in the art may make changes to the table assembly described above, all contained within the scope of protection as defined by the following claims.

## Claims

1. A table assembly (14) for a machine tool (1), for example a milling machine or a gantry boring machine, comprising a slide (16) translatable on command along a longitudinal axis (X), a table (18) supported by the slide (16) and rotatable with respect to a vertical axis (C), and table rotation means placed on board the slide (16) and adapted to be driven to rotate the table (16) about the vertical axis (C), wherein the table rotation means comprise at least one rotation assembly (30) engaged with a ring gear (32) of the table (18), **characterized in that** the table rotation means further comprises a torque motor (34) having a vertical motor axis (36) and a reduction gear (38) having an inlet, engaged with the torque motor (34), and an outlet pinion (40), engaged with the ring gear (32) of the table (18), coaxial to the motor axis (36).

2. A table assembly according to claim 1, wherein the reduction gear (38) of the rotation assembly (30) is epicyclic.

3. A table assembly according to claim 2, wherein the epicyclic reduction gear comprises a sun gear, planetary gears, a planetary carrier and a ring gear for reduction gear, and wherein the sun gear is rotatable and engaged with the motor axis (36) of the torque motor (34), the ring gear for reduction gear is fixed, the planetary gears roll on the sun gear and on the ring gear for reduction gear, and the planetary carrier is engaged with the outlet pinion (40).

4. A table assembly according to any one of the preceding claims, wherein the outlet pinion (40) meshes directly with the ring gear (32) of the table (18).

5. A table assembly according to any one of claims 1 to 3, wherein the rotation assembly (30) comprises an idle gear for transmitting motion between the outlet pinion (40) and the ring gear (32).

6. A table assembly according to any one of the preceding claims, wherein the table rotation means comprise two rotation assemblies (30), each rotation assembly (30) being arranged on a respective side of the slide (16).

7. A table assembly according to claim 6, wherein the two torque motors (34) of the two rotation assemblies (30) are configured to be driven in concert.

8. A table assembly according to claim 6, wherein the two torque motors (34) of the two rotation assemblies (30) are configured to be driven in opposition.

9. A table assembly according to any one of the preceding claims, comprising slide translation means placed on board the slide (16) and adapted to be driven to translate the slide (16) along the longitudinal axis (X).

10. A table assembly according to claim 9, wherein the slide translation means comprise at least one gearmotor assembly (20).

11. A table assembly according to claim 10, wherein each gearmotor assembly (20) comprises a motor (24), having a motor axis (26) orthogonal to the longitudinal axis (X) and the vertical axis (C), and a reduction gear (28) having an inlet, engaged with the motor (24), and an outlet, engageable with a rack (22), coaxial to the motor axis (26).

12. A table assembly according to claim 10 or 11, wherein the slide translation means comprise two gearmotor assemblies (20) arranged on the same side of the slide (16).

13. A table assembly according to claim 12, wherein the rotation assembly (30) is arranged between said two gearmotor assemblies (20).

14. A table assembly according to any one of claims 10 to 13, wherein the slide translation means comprise two gearmotor assemblies (20), each assembly being arranged on a respective side of the slide (16).

15. A table assembly according to claim 14, wherein the two motors (24) of the two gearmotor assemblies (20) are configured to be driven in opposition.

16. A support apparatus (10) for a machine tool (1) comprising:
- at least one table assembly (14) according to any one of the preceding claims;
- a pair of benches (12) which supports the table assembly (14), wherein each bench (12) has a main extension along the longitudinal axis (X) and is transversely spaced apart from the other.

17. A support apparatus according to claim 16, comprising two table assemblies (14).

18. A support apparatus according to claim 16 or 17, wherein the rotation assembly (30) is arranged between said benches (12).

19. A support apparatus according to any one of claims 16 to 18, when dependent on claim 10, wherein the gearmotor assembly (20) is arranged between said benches (12).

20. A machine tool (1) comprising:
- a support apparatus (10) according to any one of claims 16 to 19;
- a gantry structure (2) which supports a cart (8).

21. A machine tool (1) according to claim 20, consisting of a milling machine or a boring machine or a lathe.

## Patentansprüche

1. Tischanordnung (14) für eine Werkzeugmaschine (1), beispielsweise eine Fräsmaschine oder eine Portalbohrmaschine umfassend einen Schlitten (16), der auf Befehl entlang einer Längsachse (X) verschiebbar ist, einen Tisch (18), der von dem Schlitten (16) getragen wird und um eine vertikale Achse (C) drehbar ist, sowie Tischdrehmittel, die auf dem Schlitten (16) angeordnet sind und dazu eingerichtet sind, angetrieben zu werden, um den Tisch (16) zu drehen,
wobei die Tischdrehmittel mindestens eine Drehanordnung (30) umfassen, die mit einem Zahnkranz (32) des Tisches (18) in Eingriff steht, **dadurch gekennzeichnet, dass** die Tischdrehmittel ferner einen Drehmomentmotor (34) aufweisend eine vertikale Motorachse (36) und ein Untersetzungsgetriebe (38) aufweisend einen Eingang, der mit dem Drehmomentmotor (34) in Eingriff steht, und ein Ausgangsritzel (40), das mit dem Zahnkranz (32) des Tisches (18) in Eingriff steht, umfassen, wobei das Ausgangsritzel (40) koaxial zu der Motorachse (36) angeordnet ist.

2. Tischanordnung nach Anspruch 1, wobei das Untersetzungsgetriebe (38) der Drehanordnung (30) ein Planetengetriebe ist.

3. Tischanordnung nach Anspruch 2, wobei das Planetengetriebe ein Sonnenrad, Umlaufgetrieben, einen Planetenträger und einen Zahnkranz für das Untersetzungsgetriebe umfasst, und wobei das Sonnenrad drehbar ist und mit der Motorachse (36) des Drehmomentmotors (34) in Eingriff steht, der Zahnkranz für das Untersetzungsgetriebe fest angeordnet ist, die Umlaufgetrieben auf dem Sonnenrad und dem Zahnkranz für das Untersetzungsgetriebe abrollen, und der Planetenträger mit dem Ausgangsritzel (40) in Eingriff steht.

4. Tischanordnung nach einem der vorhergehenden Ansprüche, wobei das Ausgangsritzel (40) direkt mit dem Zahnkranz (32) des Tisches (18) in Eingriff kommt.

5. Tischanordnung nach einem der Ansprüche 1 bis 3, wobei die Drehanordnung (30) ein Losrad zum Übertragen der Bewegung zwischen dem Ausgangsritzel (40) und dem Zahnkranz (32) umfasst.

6. Tischanordnung nach einem der vorhergehenden Ansprüche, wobei die Tischdrehmittel zwei Drehanordnungen (30) umfassen, wobei jede Drehanordnung (30) auf einer jeweiligen Seite des Schlittens (16) angeordnet ist.

7. Tischanordnung nach Anspruch 6, wobei die beiden Drehmomentmotoren (34) der beiden Drehanordnungen (30) dazu konfiguriert sind, zusammen angetrieben zu werden.

8. Tischanordnung nach Anspruch 6, wobei die beiden Drehmomentmotoren (34) der beiden Drehanordnungen (30) dazu konfiguriert sind, gegensinnig angetrieben zu werden.

9. Tischanordnung nach einem der vorhergehenden Ansprüche, umfassend Schlitten-Verschiebungsmittel, die auf dem Schlitten (16) angeordnet sind und eingerichtet sind, angetrieben zu werden, um den Schlitten (16) entlang der Längsachse (X) zu verschieben.

10. Tischanordnung nach Anspruch 9, wobei die Schlitten-Verschiebungsmittel mindestens eine Getriebemotoranordnung (20) umfassen.

11. Tischanordnung nach Anspruch 10, wobei jede Getriebemotoranordnung (20) einen Motor (24) aufweisend eine Motorachse (26), die sich orthogonal zu der Längsachse (X) und zu der Vertikalachse (C) erstreckt, und ein Untersetzungsgetriebe (28) aufweisend einen Eingang, der mit dem Motor (24) in Eingriff steht, und einem Ausgang, der mit einer Zahnstange (22) in Eingriff kommen kann, umfasst, wobei die Zahnstange koaxial zu der Motorachse (26) ist.

12. Tischanordnung nach Anspruch 10 oder 11, wobei die Schlitten-Verschiebungsmittel zwei Getriebemotoranordnungen (20) umfassen, die auf derselben Seite des Schlittens (16) angeordnet sind.

13. Tischanordnung nach Anspruch 12, wobei die Drehanordnung (30) zwischen den beiden Getriebemotoranordnungen (20) angeordnet ist.

14. Tischanordnung nach einem der Ansprüche 10 bis 13, wobei die Schlitten-Verschiebungsmittel zwei Getriebemotoranordnungen (20) umfassen, wobei jede Anordnung auf einer jeweiligen Seite des Schlittens (16) angeordnet ist.

15. Tischanordnung nach Anspruch 14, wobei die beiden Motoren (24) der beiden Getriebemotoranordnungen (20) dazu konfiguriert sind, gegensinnig angetrieben zu werden.

16. Stützvorrichtung (10) für eine Werkzeugmaschine (1), umfassend:
mindestens eine Tischanordnung (14) nach einem der vorhergehenden Ansprüche;
ein Paar von Tischen (12), die die Tischanordnung (14) tragen, wobei jeder Tisch (12) eine Haupterstreckung entlang der Längsachse (X) aufweist und quer von der anderen beabstandet ist.

17. Stützvorrichtung nach Anspruch 16, umfassend zwei Tischanordnungen (14).

18. Stützvorrichtung nach Anspruch 16 oder 17, wobei die Drehanordnung (30) zwischen den Tischen (12) angeordnet ist.

19. Stützvorrichtung nach einem der Ansprüche 16 bis 18, wenn sie von Anspruch 10 abhängt, wobei die Getriebemotoranordnung (20) zwischen den Tischen (12) angeordnet ist.

20. Werkzeugmaschine (1), umfassend:
eine Stützvorrichtung (10) nach einem der Ansprüche 16 bis 19;
eine Portalstruktur (2), die einen Wagen (8) trägt.

21. Werkzeugmaschine (1) nach Anspruch 20, bestehend aus einer Fräsmaschine oder einer Bohrmaschine oder einer Drehmaschine.

## Revendications

1. Un ensemble de table (14) pour une machine-outil (1), par exemple une fraiseuse ou une aléseuse à portique, comprenant un chariot (16) translatable sur commande le long d'un axe longitudinal (X), une table (18) supportée par le chariot (16) et rotative par rapport à un axe vertical (C), et des moyens de rotation de table disposés à bord du chariot (16) et adaptés à être entraînés pour faire tourner la table (16) autour d'un axe vertical ^{©}
les moyens de rotation de table comprennent au moins un ensemble de rotation (30) engrené avec une couronne dentée (32) de la table (18), **caractérisé en ce que** les moyens de rotation de table comprennent en outre un moteur couple (34) ayant un axe de moteur vertical (36) et un réducteur (38) ayant une entrée, engrenée avec le moteur couple (34), et un pignon de sortie (40), engrené avec la couronne dentée (32) de la table (18), coaxial à l'axe du moteur (36).

2. Un ensemble de table selon la revendication 1, dans lequel le réducteur (38) de l'ensemble de rotation (30) est épicycloïdal.

3. Un ensemble de table selon la revendication 2, dans lequel le réducteur épicycloïdal comprend un pignon solaire, des pignons planétaires, un porte-satellites et une couronne de réducteur, et dans lequel le pignon solaire est rotatif et engrené avec l'axe du moteur (36) du moteur couple (34), la couronne de réducteur est fixe, les pignons planétaires roulent sur le pignon solaire et sur la couronne de réducteur, et le porte-satellites est engrené avec le pignon de sortie (40).

4. Un ensemble de table selon l'une quelconque des revendications précédentes, dans lequel le pignon de sortie (40) engrène directement avec la couronne dentée (32) de la table (18)

5. Un ensemble de table selon l'une quelconque des revendications 1 à 3, dans lequel l'ensemble de rotation (30) comprend un pignon fou pour transmettre le mouvement entre le pignon de sortie (40) et la couronne dentée (32).

6. Un ensemble de table selon l'une quelconque des revendications précédentes, dans lequel les moyens de rotation de table comprennent deux ensembles de rotation (30), chaque ensemble de rotation (30) étant disposé sur un côté respectif du chariot (16)

7. Un ensemble de table selon la revendication 6, dans lequel les deux moteurs couple (34) des deux ensembles de rotation (30) sont configurés pour être conduits en concert.

8. Un ensemble de table selon la revendication 6, dans lequel les deux moteurs couple (34) des deux ensembles de rotation (30) sont configurés pour être entraînés en opposition.

9. Un ensemble de table selon l'une quelconque des revendications précédentes, comprenant des moyens de translation du chariot disposés à bord du chariot (16) et adaptés à être entraînés pour translater le chariot (16) le long de l'axe longitudinal (X).

10. Un ensemble de table selon la revendication 9, dans lequel les moyens de translation du chariot comprennent au moins un ensemble motoréducteur (20).

11. Un ensemble de table selon la revendication 10, dans lequel chaque ensemble motoréducteur (20) comprend un moteur (24), ayant un axe de moteur (26) orthogonal à l'axe longitudinal (X) et à l'axe vertical (C), et un réducteur (28) ayant une entrée, engrenée avec le moteur (24), et une sortie, engrenable avec une crémaillère (22), coaxiale à l'axe du moteur (26).

12. Un ensemble de table selon la revendication 10 ou 11, dans lequel les moyens de translation du chariot comprennent deux ensembles motoréducteurs (20) disposés du même côté du chariot (16).

13. Un ensemble de table selon la revendication 12, dans lequel l'ensemble de rotation (30) est disposé entre lesdits deux ensembles motoréducteurs (20).

14. Un ensemble de table selon l'une quelconque des revendications 10 à 13, dans lequel les moyens de translation du chariot comprennent deux ensembles motoréducteurs (20), chaque ensemble étant disposé sur un côté respectif du chariot (16).

15. Un ensemble de table selon la revendication 14, dans lequel les deux moteurs (24) des deux ensembles motoréducteurs (20) sont configurés pour être entraînés en opposition.

16. Un appareil de support (10) pour une machine-outil (1) comprenant :
au moins un ensemble de table (14) selon l'une quelconque des revendications précédentes;
une paire de bancs (12) qui supporte l'extension de l'ensemble de table (14), chaque banc (12) s'étendant le long de l'axe longitudinal (X) et étant transversalement espacé de l'autre.

17. Un appareil de support selon la revendication 16, comprenant deux ensembles de table (14)

18. Un appareil de support selon la revendication 16 ou 17, dans lequel l'ensemble de rotation (30) est disposé entre lesdits bancs (12).

19. Un appareil de support selon l'une quelconque des revendications 16 à 18, lorsqu'il dépend de la revendication 10, dans lequel l'ensemble motoréducteur (20) est disposé entre lesdits bancs (12).

20. Une machine-outil (1) comprenant :
un appareil de support (10) selon l'une quelconque des revendications 16 à 19;
une structure à portique (2) qui supporte un chariot (8).

21. Une machine-outil (1) selon la revendication 20, constituée d'une fraiseuse ou d'une aléseuse ou d'un tour.
